# EUROPÄISCHE PATENTANMELDUNG

(11) **EP 1 574 753 A1**
(43) Veröffentlichungstag der Anmeldung: **14.09.2005**
(21) Anmeldenummer: 04006026.1
(22) Anmeldetag: 13.03.2004
(51) Int. Cl.: F16H 25/24

(54) **Wälzkörpergewindetrieb mit Sicherungsfunktion**

(71) Anmelder: Rexroth Star GmbH, 97424 Schweinfurt (DE)
(72) Erfinder: Fuhlendorf, Peter, 97490 Poppenhausen (DE)

(57) **Zusammenfassung**

Die Erfindung betrifft einen Wälzkörpergewindetrieb (10) mit Sicherungsfunktion, umfassend eine Spindel (12) mit einer Achse (14), wobei an der Außenumfangsfläche (16) der Spindel (12) mindestens eine schraubenförmig um die Achse (14) verlaufende Spindelnut (18) vorgesehen ist, und eine die Spindel (12) umgreifende Mutter (20) mit wenigstens einer zu der zugehörigen Spindelnut (18) komplementär ausgebildeten Mutternut (22), welche mit der zugehörigen Spindelnut (18) einen Gewindekanal (24) bildet, in dem eine Reihe von Wälzkörpern (26) aufgenommen ist, und einem Sicherungsabschnitt (28), der mit der Spindel (12) in ein vorbestimmtes Spiel aufweisendem Schraubeingriff steht, wobei der Sicherungsabschnitt (28) an der Mutter (20) angeordnet ist. Erfindungsgemäß wird der Sicherungsabschnitt (28) von einer Profilmaterialwendel (30) gebildet, die im Gewindekanal (24) angeordnet ist.

## Beschreibung

Die Erfindung betrifft einen Wälzkörpergewindetrieb mit Sicherungsfunktion, umfassend eine Spindel mit einer Achse, wobei an der Außenumfangsfläche der Spindel mindestens eine schraubenförmig um die Achse verlaufende Spindelnut vorgesehen ist, und eine die Spindel umgreifende Mutter mit wenigstens einer zu der zugehörigen Spindelnut komplementär ausgebildeten Mutternut, welche mit der zugehörigen Spindelnut einen Gewindekanal bildet, in dem eine Reihe von Wälzkörpern aufgenommen ist, undeinem Sicherungsabschnitt, der mit der Spindel in ein vorbestimmtes Spiel aufweisendem Schraubeingriff steht, wobei der Sicherungsabschnitt an der Mutter angeordnet ist.

Ein derartiger Wälzkörpergewindetrieb ist beispielsweise aus der DE 201 12 533 U1 bekannt. In der dortigen Fig. 4 ist ein Wälzkörpergewindetrieb 1 umfassend eine Spindel 6 mit einer Spindelnut 16, eine Mutter 7, eine Reihe von Wälzkörpern 24 und einen Sicherungsabschnitt 12, der an der Mutter angeordnet ist, gezeigt. Der Sicherungsabschnitt steht in Schraubeingriff mit der Spindel derart, dass im Normalbetrieb ein vorbestimmtes Spiel zwischen Sicherungsabschnitt und Spindel vorliegt. Versagt der Wälzkörpereingriff zwischen Spindel und Mutter beispielsweise wegen Überlast, so wird das Spiel zwischen Spindel und Sicherungsabschnitt aufgehoben und der Sicherungsabschnitt überträgt die Last, so dass der Wälzkörpergewindetrieb nicht durchrutscht. Der Nachteil dieser Ausführungsform besteht in der aufwendigen Montage des Sicherungsabschnitts. Hierbei wird zunächst der Sicherungsabschnitt auf die Spindel aufgeschraubt und in Kontakt mit der Mutter gebracht. Anschließend wird das gewünschte Spiel zwischen Sicherungsabschnitt und Spindel eingestellt und die Lage der Befestigungsbohrungen des Sicherungsabschnittes auf der Mutter angerissen. Danach wird der Sicherungsabschnitt wieder entfernt und die Mutter mit Gewindebohrungen versehen. Nun wird der Sicherungsabschnitt nach erneutem Aufschrauben auf die Spindel mit Schrauben an der Mutter befestigt.

Aus dem Stand der Technik ist auch bekannt, den Sicherungsabschnitt einstückig mit der Mutter auszubilden. Hierzu werden an die Mutter, beispielsweise mittels einer Drehbearbeitung, Gewindefortsätze angeformt, die mit der Spindelnut in Schraubeingriff stehen. Auch bei dieser Ausführungsform bereitet die exakte Ausrichtung der Mutternut und der Gewindefortsätze Probleme, da für deren Herstellung zwei Arbeitsgänge mit unterschiedlichen Aufspannungen notwendig sind.

Aus US 2319063 ist ein Gewindetrieb bestehend aus (vgl. dortige Fig. 2) einer Spindel 10 mit einer Spindelnut 12 und einer Mutter 9 mit einer Mutternut 13 bekannt. Die Spindelnut und die Mutternut sind komplementär ausgeführt und bilden einen Gewindekanal, in dem eine Profilmaterialwendel 14 angeordnet ist. Die Profilmaterialwendel wird bevorzugt als gehärtete Stahlspiralfeder ausgeführt. Die Spiralfeder ist ungenau gefertigt (vgl. Seite 2, Zeile 18) und liegt daher unter Vorspannung an Spindel und Mutter an, so dass Schraubeingriff besteht.

Ausgehend vom beschriebenen Stand der Technik besteht die Aufgabe der Erfindung in der vereinfachten Montage eines gattungsgemäßen Wälzkörpergewindetriebs.

Diese Aufgabe wird erfindungsgemäß dadurch gelöst, dass der Sicherungsabschnitt von einer Profilmaterialwendel gebildet wird, die in dem Gewindekanal aufgenommen ist. Die Profilmaterialwendel liegt an der Mutternut an, wodurch deren relative Lage zur Spindelnut fixiert ist. Eine aufwendige Ausrichtprozedur ist nicht mehr erforderlich.

In Weiterbildung der Erfindung wird vorgeschlagen, dass die Profilmaterialwendel mit Vorspannung in radialer Richtung an der Mutternut anliegt. Die Profilmaterialwendel wird sich daher, aufgrund ihrer relativ zur Mutter geringeren Steifigkeit, an die Mutternut anschmiegen, wobei die möglicherweise nichtideale Spiralform der nicht montierten Profilmaterialwendel korrigiert wird. Damit ist sichergestellt, dass das vorbestimmte Spiel zwischen Sicherheitsabschnitt und Spindel den korrekten Wert aufweist.

Sollte die Haftreibung zwischen Profilmaterialwendel und Mutternut, im Störungsfall nicht ausreichen um ein Verschieben der Profilmaterialwendel entlang des Gewindekanals sicher auszuschließen, wird vorgeschlagen, die Profilmaterialwendel stoffschlüssig oder formschlüssig gegen Lageänderung relativ zur Mutternut zu sichern. Hierfür kommen die Verfahren Kleben, Löten, Schweißen und Verstemmen in Betracht. Darüber hinaus kann in Gewindekanalrichtung vor und hinter der Profilmaterialwendel je ein Stift vorgesehen sein, der die Mutter durchsetzt. Weiterhin kann an einem Ende der Profilmaterialwendel ein Hakenabschnitt vorgesehen sein, der eine Ausnehmung in der Mutter durchsetzt.

Darüber hinaus wird vorgeschlagen, dass die Wälzkörper Kugeln sind, wobei sowohl die Spindelnut als auch die Mutternut in einem achsenthaltenden Querschnitt betrachtet näherungsweise kreisförmig ausgebildet sind, wobei weiter die Profilmaterialwendel im achsenthaltenden Querschnitt betrachtet ebenfalls näherungsweise kreisförmig ausgebildet ist. Vorzugsweise ist der Kreisprofildurchmesser der Kreisprofilmaterialwendel kleiner als der Durchmesser der Kugeln, damit das vorbestimmte Spiel zwischen Sicherheitsabschnitt und Spindel gewährleistet ist.

Weiterhin wird vorgeschlagen, dass die Wälzkörper in einem endlosen Umlaufkanal umlaufen, wobei die Wälzkörper von einem ersten Umlenkkanal aus dem Gewindekanal in einen Rückführkanal und von dort über einen zweiten Umlenkkanal zurück in den Gewindekanal überführt werden, wobei der Gewindekanal vom ersten Umlenkkanal unterbrochen und in einen ersten und einen zweiten Gewindekanalabschnitt unterteilt wird, wobei die Wälzkörper im ersten Gewindekanalabschnitt umlaufen und die Profilmaterialwendel im zweiten Gewindekanalabschnitt angeordnet ist. Die Umlenkkanäle und der Rückführkanal werden bevorzugt gemäß DE 100 12 810 A1 ausgeführt. Daher wird die Offenbarung der DE 100 12 810 A1 in Bezug genommen und zum Teil der Offenbarung der vorliegenden Anmeldung gemacht.

In Weiterbildung dieser Ausführungsform wird weiter vorgeschlagen, an der Außenumfangsfläche der Mutter ein Befestigungsgewinde vorzusehen, wobei die Profilmaterialwendel innerhalb der Längserstreckung des Befestigungsgewindes angeordnet ist. Auf diese Weise wird der Bauraum der Mutter optimal ausgenutzt, weil die Längserstreckung des Befestigungsgewindes nicht für den Kugelumlauf genutzt werden kann.

Die Erfindung wird im Folgenden anhand der beigefügten Zeichnungen beschrieben werden. Es stellt dar:
- Fig. 1: eine Schnittansicht eines erfindungsgemäßen Wälzkörpergewindetriebs mit entfernter Spindel;
- Fig. 2: eine weitere Schnittansicht des Wälzkörpergewindetriebs gemäß Fig. 1; mit 90° zur Achse gedrehter Schnittebene; und
- Fig. 3: eine Prinzipskizze der Lage der Profilmaterialwendel im Gewindekanal bei Normalbetrieb eines erfindungsgemäßen Wälzkörpergewindetriebs.

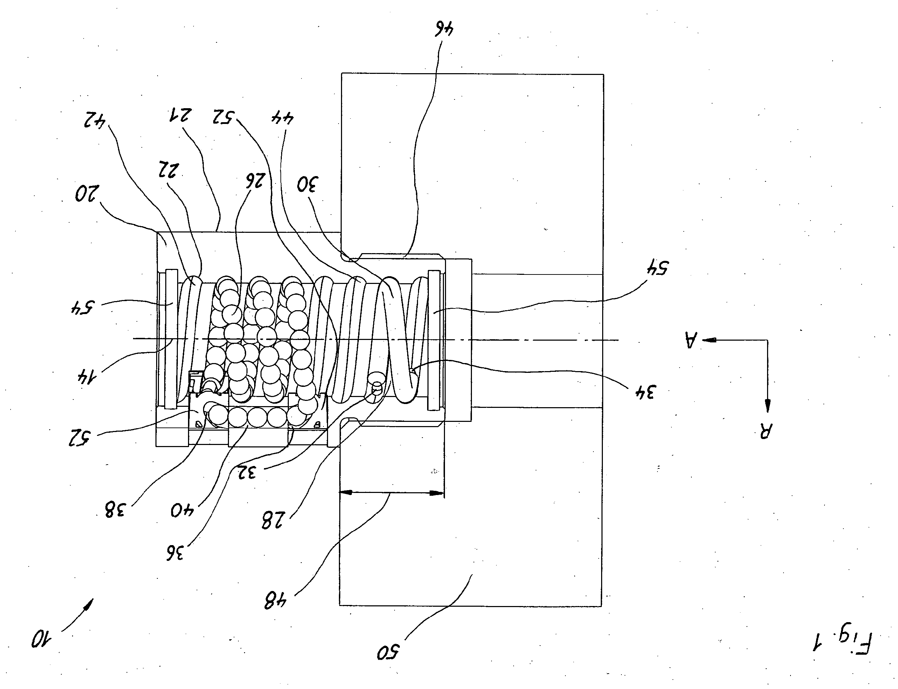

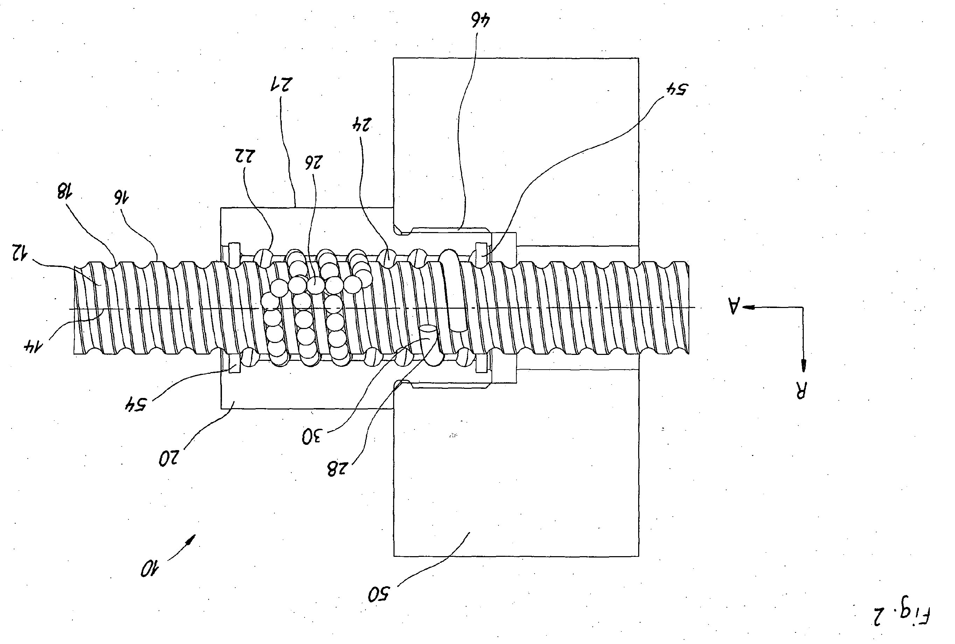

In Fig. 1 und 2 ist ein erfindungsgemäßer Wälzkörpergewindetrieb allgemein mit 10 und dessen Achse mit 14 bezeichnet. Der Wälzkörpergewindetrieb 10 besteht aus einer Spindel 12 und einer Mutter 20. An der Außenumfangsfläche 16 der Spindel ist eine Spindelnut 18 angebracht. An der Mutter 20 ist eine zur Spindelnut 18 komplementär ausgebildete Mutternut 22 angebracht. In dem Gewindekanal 24 der von der Spindelnut 18 und der komplementären Mutternut 22 gebildet wird, ist eine Reihe von Wälzkörpern 26 aufgenommen, die als Kugeln ausgeführt sind. Die Spindelnut 18 und die Mutternut 22 weisen im achsenthaltenden Querschnitt betrachtet ein gotisches oder spitzbogenförmiges Profil auf, so dass die Kugeln 26 die Spindelnut 18 und die Mutternut 22 an je zwei Punkten berühren.

Die Wälzkörper 26 laufen in einem endlosen Umlaufkanal 34 um, wobei die Wälzkörper 26 beim Verdrehen der Spindel 12 relativ zur Mutter 20 um die Achse 14, von dem ersten Umlenkkanal 36 aus dem Gewindekanal 24 in den Rückführkanal 40 überführt werden. Aus dem Rückführkanal 40 werden die Wälzkörper 26 über einen zweiten Umlenkkanal 38 zurück in den Gewindekanal 24 überführt, so dass sie endlos umlaufen können. Die Umlenkkanäle 36 und 38 werden von Umlenkelementen 52 gebildet, die in radiale Öffnungen der Mutter eingesetzt sind. Die genaue Ausführung der Umlenkelemente 52 ist in DE 100 12 810 A1 beschrieben. Der erste Umlenkkanal 36 teilt den Gewindekanal 24 in einen ersten Gewindekanalabschnitt 42, in dem die Wälzkörper 26 umlaufen, und einen zweiten Gewindekanalabschnitt 44 in dem sich keine Wälzkörper befinden.

An den beiden Stirnseiten der Mutter 20 sind Dichtungen 54 aus Gummi vorgesehen, die verhindern sollen, dass Schmutz von außen in den Wälzkörpergewindetrieb 10 gelangt und dass die Schmierstoffe, die sich im Wälzkörpergewindetrieb 10 befinden, nicht austreten. An einem Ende der Mutter 20 ist an deren Außenumfangsfläche 21 ein Befestigungsgewinde 46 vorgesehen, mit dem die Mutter 20 an einer übergeordneten Baugruppe 50 wie z.B. einen Maschinenschlitten befestigt werden kann. Die Längserstreckung 48 des Befestigungsgewindes 46 bestimmt die Längserstreckung des zweiten Gewindekanalabschnitts 44, in dem keine Wälzkörper umlaufen. Da die Wandstärke der Mutter 20 in diesem Bereich nicht ausreicht um ein Umlenkelement 52 und einen Rückführkanal 40 unterzubringen, muss die Mutternut 22 in diesem Bereich ungenutzt bleiben. Die Mutternut 22 wird vorzugsweise durch Gewindebohren hergestellt und erstreckt sich deshalb aus fertigungstechnischen Gründen über die gesamte Mutterlänge.

Weiterhin ist die Mutter 20 mit einem Sicherungsabschnitt 28 versehen, der von einer Profilmaterialwendel 30 gebildet wird, die im Gewindekanal 24 angeordnet ist und zwar im zweiten Gewindekanalabschnitt 44, in dem keine Wälzkörper umlaufen. Die Profilmaterialwendel 30 wird vorzugsweise aus einem runden Federstahldraht zu einer Spirale gewickelt und anschließend in den Gewindekanal 24 eingesetzt. Um ein Verschieben der Profilmaterialwendel 30 relativ zur Mutter 20 zu verhindern, sind in Gewindekanalrichtung vor und hinter der Profilmaterialwendel 30 Stifte 32 angeordnet, welche die Mutter 20 durchsetzen. Der Abstand der Profilmaterialwendel 30 zu den Abschnitten der Stifte 32, die in den Gewindekanal 24 hineinragen, soll möglichst gering bzw. Null sein, damit eine Bewegung der Profilmaterialwendel 30 in Gewindekanalrichtung vollständig ausgeschlossen ist.

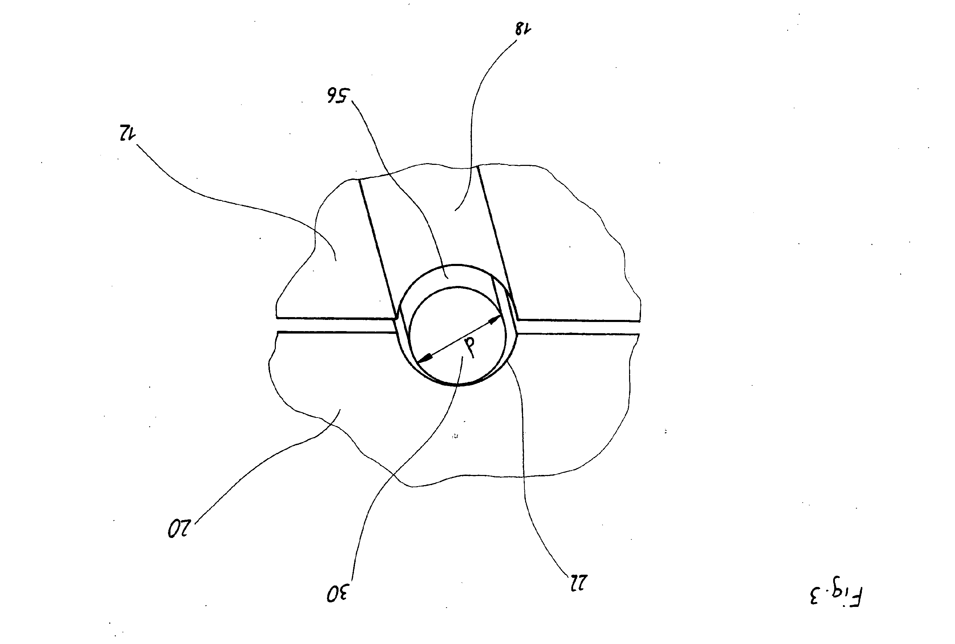

In Fig. 3 ist die Lage der Profilmaterialwendel 30 im Gewindekanal 24 im Detail dargestellt. Die Profilmaterialwendel 30 liegt an der Mutternut 22 mit Vorspannung in radialer Richtung R an. Diese Vorspannung wird dadurch erreicht, dass die Profilmaterialwendel 30 mit einem Spiraldurchmesser gewickelt wird, der größer ist als der Spiraldurchmesser der Mutternut 22. Auf diese Weise wird sichergestellt, dass die Profilmaterialwendel 30 möglichst genau der Mutternut 22 und in der Folge ebenso genau der Spindelnut 18 folgt. Der Kreisprofildurchmesser d der Profilmaterialwendel 30 ist etwas kleiner als der Durchmesser der Kugeln, so dass zwischen Profilmaterialwendel 30 und Spindelnut 18 ein Spalt 56 entsteht. Die Größe des Spalts 56 muss so bemessen sein, dass die Profilmaterialwendel 30 im Normalbetrieb des Wälzkörpergewindetriebs 10 auch bei großer Belastung desselben nicht an der Mutternut 22 streift. Gleichzeitig muss der Kreisprofildurchmesser d so groß sein, dass die Profilmaterialwendel 30 den Gewindekanal 24 so weit ausfüllt, dass ein Schraubeingriff zwischen Profilmaterialwendel und Spindelnut vorhanden ist.

Hinzuweisen ist ferner darauf, dass die Profilmaterialwendel 30 außer der Kreisform jede beliebige Querschnittsform aufweisen kann, solange die oben genannten Bedingungen für die Spaltgröße erfüllt sind. Es kommt nicht auf besonders günstige Berührverhältnisse zwischen Profilmaterialwendel 30 und Spindelnut 18 bzw. Mutternut 22 an, da der Schraubeingriff nur einmal bei Versagen des Wälzkörpereingriffs zum Einsatz kommt. Anschließend ist der Wälzkörpergewindetrieb 10 regelmäßig nicht mehr verwendbar. Die Kreisform ist bevorzugt, weil sie besonders kostengünstig herzustellen ist.

### Bezuaszeichenliste

- A: axiale Richtung
- R: radiale Richtung
- 10: Wälzkörpergewindetrieb
- 12: Spindel
- 14: Achse
- 16: Außenumfangsfläche der Spindel
- 18: Spindelnut
- 20: Mutter
- 21: Außenumfangsfläche der Mutter
- 22: Mutternut
- 24: Gewindekanal
- 26: Wälzkörper
- 28: Sicherungsabschnitt
- 30: Profilmaterialwendel
- 32: Stift
- 34: endloser Umlaufkanal
- 36: erster Umlenkkanal
- 38: zweiter Umlenkkanal
- 40: Rückführkanal
- 42: erster Gewindekanalabschnitt
- 44: zweiter Gewindekanalabschnitt
- 46: Befestigungsgewinde
- 48: Längserstreckung des Befestigungsgewindes
- 50: übergeordnetes Bauteil
- 52: Umlenkelement
- 54: Dichtung
- 56: Spalt zwischen Profilmaterialwendel und Spindelnut
- d: Kreisdurchmesser der Profilmaterialwendel

## Patentansprüche

1. Wälzkörpergewindetrieb (10) mit Sicherungsfunktion, umfassend eine Spindel (12) mit einer Achse (14), wobei an der Außenumfangsfläche (16) der Spindel mindestens eine schraubenförmig um die Achse (14) verlaufende Spindelnut (18) vorgesehen ist, und
eine die Spindel (12) umgreifende Mutter (20) mit wenigstens einer zu der zugehörigen Spindelnut (18) komplementär ausgebildeten Mutternut (22), welche mit der zugehörigen Spindelnut (18) einen Gewindekanal (24) bildet, in dem eine Reihe von Wälzkörpern (26) aufgenommen ist, und
einem Sicherungsabschnitt (28), der mit der Spindel (12) in ein vorbestimmtes Spiel aufweisendem Schraubeingriff steht, wobei der Sicherungsabschnitt (28) an der Mutter (20) angeordnet ist,
**dadurch gekennzeichnet, dass** der Sicherungsabschnitt (28) von einer Profilmaterialwendel (30) gebildet wird, die in dem Gewindekanal (24) aufgenommen ist.

2. Wälzkörpergewindetrieb nach Anspruch 1,
**dadurch gekennzeichnet, dass** die Profilmaterialwendel (30) mit Vorspannung in radialer Richtung (R) an der Mutternut (22) anliegt.

3. Wälzkörpergewindetrieb nach einem der Ansprüche 1 oder 2,
**dadurch gekennzeichnet, dass** die Profilmaterialwendel (30) stoffschlüssig oder formschlüssig gegen Lageänderung relativ zur Mutternut (22) gesichert ist.

4. Wälzkörpergewindetrieb nach Anspruch 3,
**dadurch gekennzeichnet, dass** die Profilmaterialwendel (30) mit je einem Stift (32), der in Gewindekanalrichtung vor und hinter der Profilmaterialwendel (30) angeordnet ist, gegen Lageänderung gesichert ist, wobei der Stift (32) die Mutter (20) durchsetzt.

5. Wälzkörpergewindetrieb nach einem der Ansprüche 1 bis 4,
**dadurch gekennzeichnet, dass** die Wälzkörper (26) Kugeln sind,
wobei sowohl Spindelnut (18) als auch Mutternut (22) in einem achsenthaltenden Querschnitt betrachtet näherungsweise kreisförmig, vorzugsweise spitzbogenförmig, ausgebildet sind.

6. Wälzkörpergewindetrieb nach Anspruch 5,
**dadurch gekennzeichnet, dass** die im achsenthaltenden Querschnitt betrachtete Profilmaterialwendel (30) näherungsweise kreisförmig ausgebildet ist, wobei der Kreisquerschnittsdurchmesser der Profilmaterialwendel (30) kleiner ist als der Durchmesser der Kugeln (26).

7. Wälzkörpergewindetrieb nach einem der Ansprüche 1 bis 6,
**dadurch gekennzeichnet, dass** die Wälzkörper (26) in einem endlosen Umlaufkanal (34) umlaufen,
wobei die Wälzkörper (26) von einem ersten Umlenkkanal (36) aus dem Gewindekanal (24) in einen Rückführkanal (40) und von dort über einen zweiten Umlenkkanal (38) zurück in den Gewindekanal (24) überführt werden,
wobei der Gewindekanal (24) vom ersten Umlenkkanal (36) unterbrochen und in einen ersten und einen zweiten Gewindekanalabschnitt (42; 44) unterteilt wird, und
wobei die Wälzkörper (26) im ersten Gewindekanalabschnitt (42) umlaufen und die Profilmaterialwendel (30) im zweiten Gewindekanalabschnitt (44) aufgenommen ist.

8. Wälzkörpergewindetrieb nach einem der Ansprüche 1 bis 7,
**dadurch gekennzeichnet, dass** an der Außenumfangsfläche (21) der Mutter (20) ein Befestigungsgewinde (46) vorgesehen ist,
wobei die Profilmaterialwendel (30) innerhalb der Längserstreckung des Befestigungsgewindes (46) angeordnet ist.
